# EUROPEAN PATENT SPECIFICATION

(11) **EP 0 683 598 B1**
(45) Date of publication and mention of the grant of the patent: **22.09.1999**
(21) Application number: 95303284.4
(22) Date of filing: 17.05.1995
(51) Int. Cl.: H04N 1/407

(54) **Image forming apparatus**
Bilderzeugungsgerät
Dispositif de formation d'images

(30) Priority: 18.05.1994 JP 10397894
(43) Date of publication of application: 22.11.1995
(73) Proprietor: KONICA CORPORATION, Tokyo 160 (JP)
(72) Inventor: Yokobori, Jun, Hachioji-shi, Tokyo (JP); Soma, Utami, Hachioji-shi, Tokyo (JP)
(74) Representative: Rees, Alexander Ellison

(56) References cited:
- EP-A- 0 528 358
- GB-A- 2 207 023
- US-A- 4 962 421
- US-A- 5 204 736

## Description

### BACKGROUND OF THE INVENTION

The present invention relates to an image forming apparatus in which a document image is formed on a transfer sheet by the digital image forming system, and more particularly relates to an image forming apparatus capable of forming an image by setting a γ-curve.

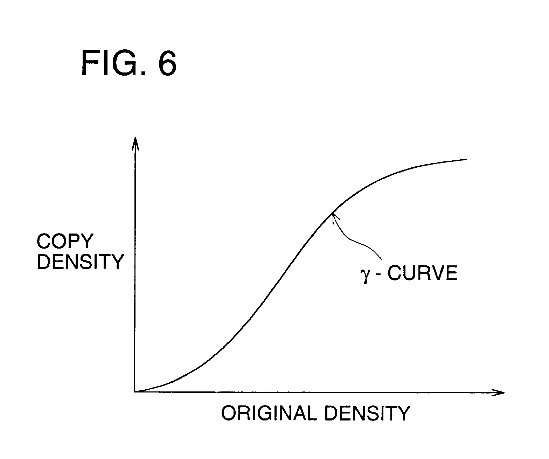

In this case, the γ-curve shows a relation of density between the document and the copy as illustrated in Fig. 6. When this γ-curve changes, the copy image characteristics also change in accordance with the γ-curve.

Even in the conventional copier of the analog system, image density is adjusted by changing the development bias. In an image forming apparatus of the digital system, a document image is formed on a light receiving element such as CCD by an optical system. Then an electric signal obtained by photoelectric conversion is subjected to image processing. After that, the electric signal is converted into an optical signal by means of laser, and a latent image is formed on an image forming body. Consequently, in the image forming apparatus of the digital system, it is possible to correct image density using a γ-curve in the image processing section. In the copier of the digital system, a plurality of γ-curves are previously provided, and values of the γ-curves are inputted in accordance with the use.

A known system of colour correction is disclosed in US Patent No. 5 204 736. This discloses an image processing apparatus in which a document image is converted into an electrical signal and corrected by correcting means to generate a recording signal which is supplied to a writing unit to form recorded images on a transfer sheet. The correcting means generates a plurality of test images having different altered colour balances which are compared by the operator so that the optimum colour balance for printing can be determined. Once the optimum colour balance for printing has been selected this colour balance is used for the printing operation.

Another known method is disclosed in US Patent No. 4 962 421. This discloses an image forming apparatus in which a document is converted into an electric signal and correcting means correct the image using γ-curves to alter the colour balance to generate a recording signal. The correcting means uses a plurality of different γ-curves for colour balance correction to generate a plurality of test prints. The operator selects the best test print and this γ-curve is used for colour correction for the printing.

In both US 4 962 421 and US 5 204 736 it is essential to go through the steps of generating a plurality of adjusted images and selecting from the plurality of images if colour balance is to be adjusted.

Using the present invention predetermined values obtained from a γ-curve are inputted when the document to be copied is a newspaper, while the result can not be checked. In the same manner, predetermined values obtained from γ-curve used for a wire-dot printer are inputted. Further, the apparatus is set in such a manner that the operator can not neglect to input the values of a γ-curve.

### SUMMARY OF THE INVENTION

In the case of a copier of the digital system, when a γ-curve suitable for a document to be copied is selected, fog of the background can be reduced, so that an image of appropriate density can be provided. An object of the present invention is to provide an image forming apparatus in which the operator can select a γ-curve suitable for the document in accordance with his visual judgement.

In order to accomplish the above objects, the first embodiment of the present invention comprises the following composition.

An image forming apparatus comprising:
(a) image recording means for recording an image on a recording sheet based on an image signal;
(b) a first memory for storing a predetermined plurality of γ-correction values for correcting γ-characteristic of the image;
(c) control means for correcting the image signal according to one of the predetermined plurality of γ-correction values stored in the first memory and for sending the corrected image signal to the image recording means, wherein when an image monitor mode is selected, the control means controls the image recording means to form a plurality of monitor images corresponding to the predetermined plurality of γ-correction values stored in the first memory;
and characterised by further comprising:
(d) a second memory for storing data in accordance with a preset γ-correction value that an operator desires and selects corresponding to a selected one of the plurality of monitor images;
(e) inputting means for enabling the operator to input said desired preset γ-correction value to said second memory; and
(f) an instructing means for recalling said data in accordance with said preset γ-correction value stored in the second memory, wherein when said preset γ-correction value is recalled by operation of the instructing means, the control means corrects the image signals based on said recalled preset γ-correction value without forming said plurality of monitor images and sends the corrected image signal to the image recording means for recording of the image on the recording sheet.

In a preferred embodiment of the present invention the image forming apparatus further comprises:
an image reading section for reading a document image on a document and for converting the document image into the image signal.

### BRIEF DESCRIPTION OF THE INVENTION

Fig. 1 is an arrangement view showing an example of the image forming apparatus of the present invention.

Fig. 2 is a block diagram showing a control system of the image forming apparatus of the present invention.

Fig. 3 is a flow chart used for setting a γ-curve according to the present invention.

Fig. 4(a) to 4(c) are a schematic illustration for explaining an example of the monitor output image of the present invention.

Fig. 5 is a schematic illustration for explaining the density and γ-setting section of the present invention.

Fig. 6 is a view showing the γ curve.

### DETAILED DESCRIPTION OF THE PREFERRED EMBODIMENT

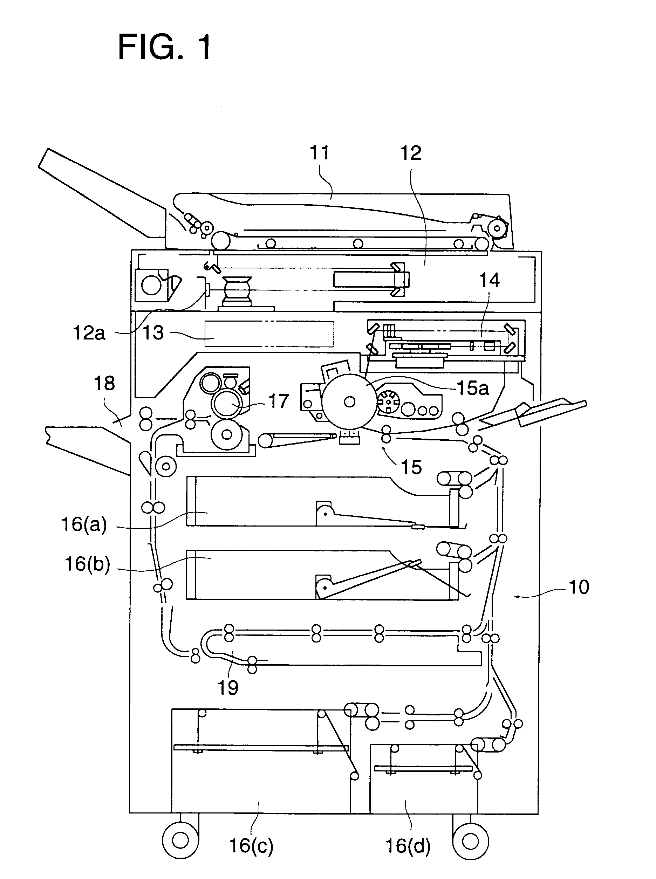

Fig. 1 is an overall arrangement view of the example of the image forming apparatus of the present invention. An automatic document feeding section 11 is arranged on an upper surface of the image forming apparatus body 10. Documents are stacked on the automatic document feeding section 11. The uppermost document is taken out from the stack of documents and conveyed onto a platen glass on which the document image is read. The automatic document feeding section 11 reverses the document, and the reversed document is automatically conveyed onto the platen glass. Alternatively, it is possible to manually put a sheet of document at an exposure position on the platen glass.

Numeral 12 is an image reading unit. In the image reading unit, a document on the platen glass is exposed to light, and the exposed document image is formed on a light receiving element such as CCD 12a by an optical system composed of a mirror and image formation lens. CCD 12a reads image information on the document. Then image information is subjected to photoelectric conversion, and an electric image signal is outputted. Numeral 13 is an image processing section. In the image processing section, the image signal outputted from the image reading unit 12 is converted into a recording signal suitable for laser recording.

Numeral 22 is an image storage unit composed of a semiconductor memory. Document image information processed in the image processing section 13 is temporarily stored. In the case of image formation, the stored image information is outputted from the image storage unit 22 to the writing unit 14 as a recording signal. The writing unit 14 is a laser optical system. In the writing unit 14, optical scanning is conducted on a rotational photoreceptor drum 15a, and a latent image is formed. An image formation processing section 15 includes: the photoreceptor drum 15a; and chargers and developing units arranged around the periphery of the photoreceptor drum. In the image formation processing section 15, the latent image is developed, so that a toner image is formed. The toner image is transferred onto a transfer sheet discharged and synchronously fed from one of the sheet feeding sections 16(a), 16(b), 16(c), 16(d). The transfer sheet onto which the toner image has already been transferred is subjected to fixing in the fixing unit 17. After that, the transfer sheet is discharged from the sheet discharge section 18 in the case of the one-sided copy mode.

In the case of the two-sided copy mode, after one side of a transfer sheet has been fixed by the fixing unit 17, it is conveyed to the two-sided copying apparatus 19. After the transfer sheet has been reversed, a toner image is transferred onto the reverse side of the transfer sheet in the image formation processing section 15, and the toner image on the reverse side is fixed by the fixing unit 17. Then the transfer sheet is discharged from the sheet discharge section 18.

The image forming apparatus of the present invention is provided with an SGU unit (Signal Generating Unit) 23 for generating a printing pattern in which data previously stored in the memory such as ROM is transmitted to the writing unit 14. Therefore, an image signal sent from the image reading unit 12, image storing unit 22 or SGU unit is inputted into the writing unit 14, and an electrostatic latent image is formed on the photoreceptor drum 15a. When the image monitor mode is selected, the SGU unit 23 has a function in which γ-curves are numbered in the case where a document read by the image reading unit 12 is printed on a transfer sheet by the writing unit 14, wherein the image is printed as a monitor image divided by a plurality of different γ-curves. When an operator inputs a desired γ-curve through ten keys on the key board after he has checked on the monitor image, it is possible that the γ-curve is stored in the memory (RAM) for arbitrarily setting the image density, and also it is possible that image formation is carried out in accordance with a γ-curve called from the memory when necessary.

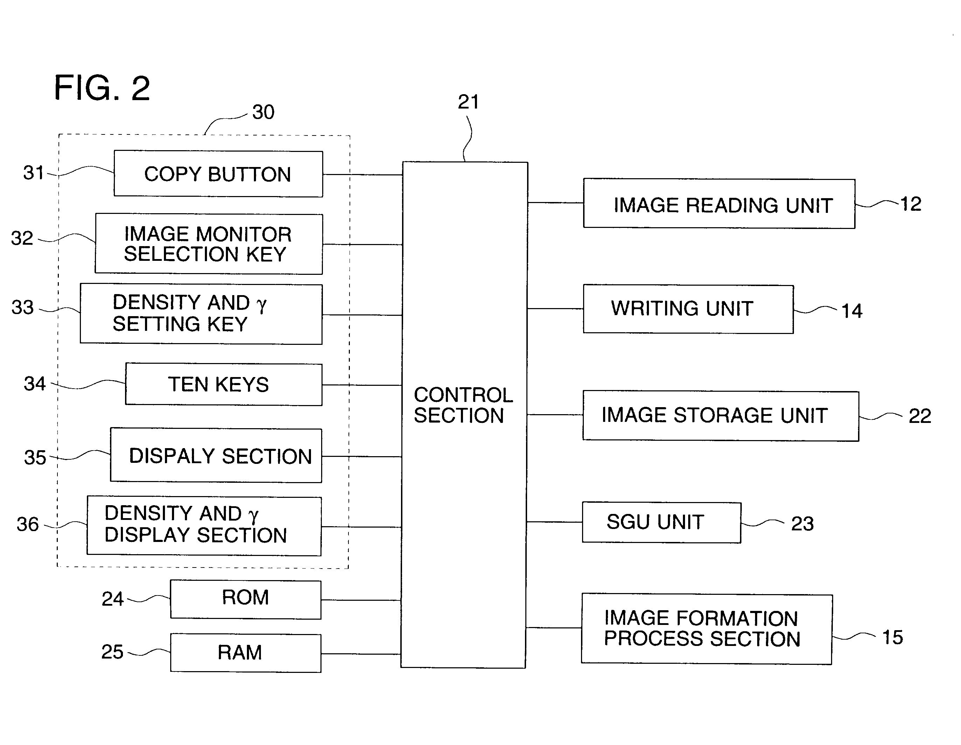

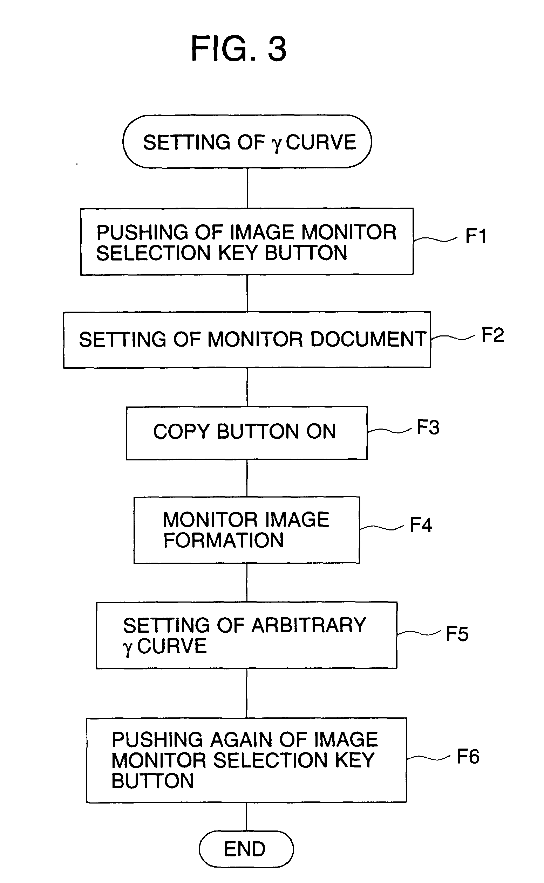

Fig. 2 is a block diagram of the apparatus of the present invention. Fig. 3 is a flow chart of the present invention. When the most appropriate γ-curve for the document is selected and set, according to the flow shown in Fig. 3, an image monitor selection key 32 on the operation panel provided on the upper surface of the image forming apparatus body 10 is pressed (F1). In this way, the image monitor mode is set. The operator sets a document to be copied on the platen (F2). For example, when a large number of copies are made from an article of a newspaper older than 10 years, the newspaper older than 10 years is set on the platen. Since the newspaper is older than 10 years, the background of the newspaper becomes thin brown. Accordingly, the most appropriate γ-curve of the old newspaper is different from that of the present newspaper.

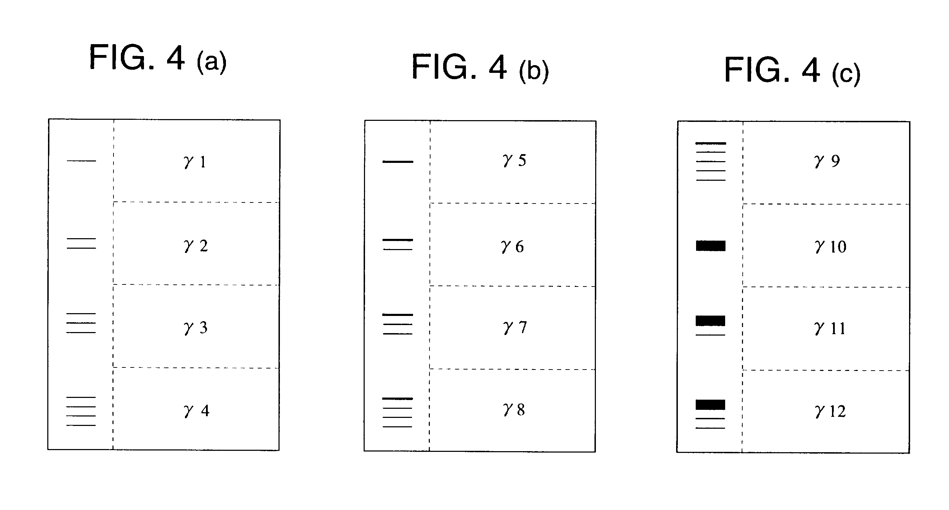

Next, the copy button 31 on the operation panel 30 is turned on (F3), and the monitor image is formed (F4). That is, when the copy button 31 is turned on, the SGU unit 23 calls up necessary information about the γ-curve from the ROM 24, and the monitor image that has been read by the image reading unit 12 is printed on one transfer sheet by the writing unit 14 in the form of an image that has been divided by a plurality of γ-curves. Figs. 4(a) to 4(c) show an example. When there are 12 types of γ-curves to be selected, 3 copies are made, wherein each copy is divided by 4 types of γ-curves. In this case, each γ-curve is numbered. The numeral is displayed on each image screen or in a portion close to the image screen. In the example shown in Figs. 4(a) to 4(c), the numerals of the γ-curves are expressed by symbols. In other words, the fine line expresses 1, the intermediate line expresses 5, and the bold line expresses 10. When these symbols are combined, a numeral is represented.

According to visual judgment of an operator, the most appropriate γ-curve is selected, and the arbitrary γ-curve is set by the ten keys 34, and then the setting condition is confirmed by the set key 33 (F5). The characteristic of the thus set γ-curve is stored in the RAM 25. In this example, the operator determines the first appropriate and second appropriate γ-curves, and the numerals of the γ-curve are inputted through the ten keys 34, and they are finally confirmed by the set key 33. In the ROM 24, the characteristics of the γ-curves 1 to 12 are stored. Then the characteristic of a γ-curve finally determined by the set keys is called out from the ROM 24. The characteristic of the γ-curve, the numeral of which has been determined first, is stored in the first storage region in the RAM 25, and the characteristic of the γ-curve, the numeral of which has been determined second, is stored in the second storage region in the RAM 25. After the arbitrary γ-curves have been set, the image monitor selection key 32 is pressed again, so that the monitor mode is released (F6).

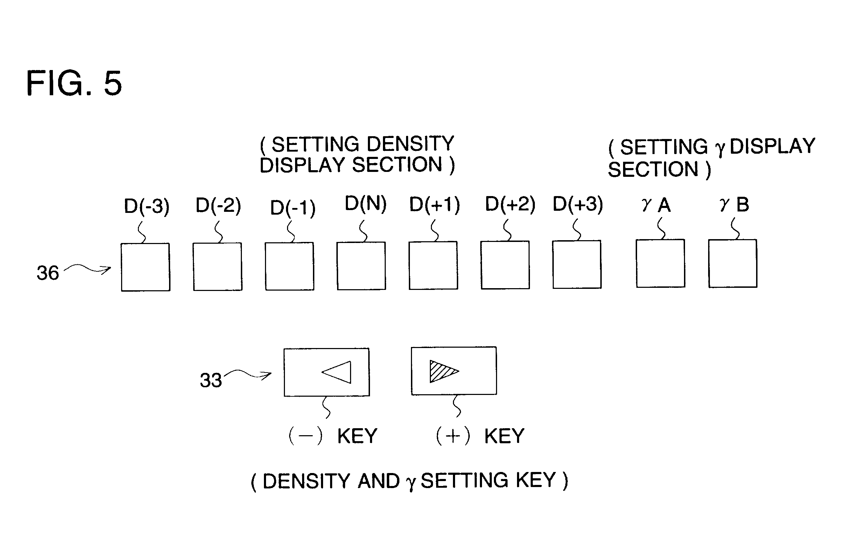

Fig. 5 is a view showing a density and γ-display section 36, and a density and γ setting key 33 provided on the operation panel 30 of this example. As illustrated in the drawing, the density display section includes 7 steps of D(-3), D(-2), D(-1), D(N), D(+1), D(+2) and D(+3). The γ display section includes 2 steps of γ(A) and γ(B). As illustrated in the drawing, these steps are located adjacent to each other, and a lamp is turned on at a position where the density or γ-curve has been set. Concerning the density and γ setting key 33, there are provided 2 types keys. One is a (+) key, and the other is a (-) key. When the (+) key is pressed, the setting position is moved by one step to the direction of (+). Normally, the lamp of the display section of D(N) is turned on, and copy operation is carried out under the normal condition. When the (+) key is once pressed, D(+) is turned on, and a condition in which a higher density is provided can be set. In this way, the density that is higher by one step can be provided. When the (+) key is successively pressed, the lighting position is moved to D(+2) and D(+3), so that the setting section is changed. When the key is further pressed, the display section of γ(A) is turned on. When the key is furthermore pressed, the display section of γ(B) is turned on. Under the condition that the display section of γ(A) is turned on, image formation is carried out in accordance with the γ-curve characteristic stored in the first storage region of the RAM 25, wherein this γ-curve has been determined first. Under the condition that the display section of γ(B) is turned on, image formation is carried out in accordance with the γ-curve characteristic stored in the second storage region of the RAM 25, wherein this γ-curve has been determined second. Consequently, for example, the γ-curve, by which clear characters can be obtained from a copied monitor image of a newspaper older than 10 years, is visually selected and set by the operator, and this most preferable γ-curve can be easily called out from the memory. Accordingly, even when the article of a newspaper older than 10 years is copied, the density and γ setting key is pressed so that the display section of γ(A) is turned on, and then the copy button 31 is pressed. In this way, clear characters can be copied under the condition that the background colors are evaded from the copy.

In this example, with respect to the same monitor image, the γ-curves are stored in the first and second γ-curve storage regions. The storage regions are not necessarily limited to the two regions. With respect to the different monitor images A and B, the first γ-curve (A) and the second γ-curve (A), and the first γ-curve (B) and the second γ-curve (B) may be stored, for example, in the first to fourth storage regions so that they can be easily called out. It should be noted that the foregoing is included in the present invention.

According to the present invention, the operator is able to select the most desirable image outputted by the monitor in accordance with his visual judgment, so that the arbitrary γ-curve is selected. Accordingly, the most preferable image can be provided in accordance with the preference of the operator. When arbitrary γ-curves are selected and set with respect to the specific documents such as newspapers which are copied frequently, the most preferable copy image can be provided in accordance with the preference of the operator.

## Claims

1. An image forming apparatus (10) comprising:
(a) image recording means (14,15) for recording an image on a recording sheet based on an image signal;
(b) a first memory (23) for storing a predetermined plurality of γ-correction values for correcting γ-characteristic of the image;
(c) control means (21) for correcting the image signal according to one of the predetermined plurality of γ-correction values stored in the first memory and for sending the corrected image signal to the image recording means, wherein when an image monitor mode is selected, the control means controls the image recording means to form a plurality of monitor images corresponding to the predetermined plurality of γ-correction values stored in the first memory;
and characterised by further comprising:
(d) a second memory (25) for storing data in accordance with a preset γ-correction value that an operator desires and selects corresponding to a selected one of the plurality of monitor images;
(e) inputting means (34) for enabling the operator to input said desired preset γ-correction value to said second memory; and
(f) an instructing means (33) for recalling said data in accordance with said preset γ-correction value stored in the second memory, wherein when said preset γ-correction value is recalled by operation of the instructing means, the control means corrects the image signals based on said recalled preset γ-correction value without forming said plurality of monitor images and sends the corrected image signal to the image recording means for recording of the image on the recording sheet.

2. The image forming apparatus of claim 1, wherein the second memory stores a plurality of items of data in accordance with a plurality of the predetermined plurality of γ-correction values, and wherein one of the plurality of items of data stored in the second memory can be selected by the instructing means.

3. The image forming apparatus of claim 1, further comprising γ-correction value displaying section for displaying the γ-correction value stored in the second memory.

4. The image forming apparatus of claim 1, further comprising:
an image density selection means (36) for enabling an operator to select one of a plurality of predetermined image densities displayed on an image density displaying section so as to set an overall image density of the image; and
a γ-correction value displaying section for displaying the γ-correction value stored in the second memory, wherein the γ-correction value displaying section is disposed adjacent to the image density displaying section and the instructing means can be commonly used for operating the image density selection means.

5. The image forming apparatus of claim 1, further comprising an image reading section (12,13) for reading a document image on a document and for converting the document image into an image signal.

6. The image forming apparatus according to claim 1, further comprising:
an image reading section (12,13) for reading a document image on a document and for converting the document image into said image signal.

7. The image forming apparatus of claim 6, wherein the second memory stores a plurality of items of data in accordance with a plurality of the predetermined plurality of γ-correction values, and wherein one of the plurality of items of data stored in the second memory can be selected by the instructing means.

8. The image forming apparatus of claim 6, further comprising a γ-correction value displaying section for displaying the γ-correction value stored in the second memory.

9. The image forming apparatus of claim 6, further comprising:
an image density selection means (36) for enabling an operator to select one of a plurality of predetermined image densities displayed on an image density displaying section so as to set an overall image density of the image; and
a γ-correction value displaying section for displaying the γ-correction value stored in the second memory, wherein the γ-correction value displaying section is disposed adjacent to the image density displaying section and the instructing means can be commonly used for operating the image density selection means.

## Patentansprüche

1. Bilderzeugungsvorrichtung (10), umfassend:
(a) eine Bildaufzeichnungseinrichtung (14,15) zum Aufzeichnen eines Bildes auf einem Aufzeichnungsblatt auf der Basis eines Bildsignals,
(b) einen ersten Speicher (23) zum Speichern einer vorbestimmten Mehrzahl von γ-Korrekturwerten zum Korrigieren einer γ-Charakteristik des Bildes,
(c) eine Steuereinrichtung (21) zum Korrigieren des Bildsignals gemäß einem der im ersten Speicher abgespeicherten vorbestimmten Mehrzahl von γ-Korrekturwerten und zum Übermitteln des korrigierten Bildsignals zu der Bildaufzeichnungseinrichtung, wobei, wenn ein Bildmonitormodus ausgewählt ist bzw. wird, die Steuereinrichtung die Bildaufzeichnungseinrichtung steuert, um eine Mehrzahl Monitorbilder entsprechend der im ersten Speicher abgespeicherten vorbestimmten Mehrzahl von γ-Korrekturwerten zu bilden, und
dadurch gekennzeichnet, daß sie des weiteren umfaßt:
(d) einen zweiten Speicher (25) zum Speichern von Daten gemäß einem voreingestellten γ-Korrekturwert, den eine Bedienungsperson wünscht und entsprechend einem ausgewählten aus der Mehrzahl von Monitorbildern auswählt,
(e) eine Eingabeeinrichtung (34), über die die Bedienungsperson den gewünschten voreingestellten γ-Korrekturwert in den zweiten Speicher eingeben kann, und
(f) eine Befehlseinrichtung (33) zum Abrufen der Daten gemäß dem im zweiten Speicher abgespeicherten voreingestellten γ-Korrekturwert, wobei, wenn der voreingestellte γ-Korrekturwert durch Betätigen der Befehlseinrichtung abgerufen wird, die Steuereinrichtung die Signale auf dem abgerufenen, voreingestellten γ-Korrekturwert basierend korrigiert, ohne die Mehrzahl von Monitorbildern zu bilden, und das korrigierte Bildsignal der Bildaufzeichnungseinrichtung zum Aufzeichnen des Bildes auf dem Aufzeichnungsblatt übermittelt.

2. Bilderzeugungsvorrichtung gemäß Anspruch 1, wobei der zweite Speicher eine Mehrzahl von Datenelementen gemäß einer Mehrzahl aus der vorbestimmten Mehrzahl von γ-Korrekturwerten speichert, und wobei eines aus der Mehrzahl von im zweiten Speicher abgespeicherten Datenelementen durch die Befehlseinrichtung ausgewählt werden kann.

3. Bilderzeugungsvorrichtung gemäß Anspruch 1, ferner eine γ-Korrekturwert-Anzeigesektion zum Anzeigen des im zweiten Speicher abgespeicherten γ-Korrekturwerts umfassend.

4. Bilderzeugungsvorrichtung gemäß Anspruch 1, ferner umfassend:
eine Bilddichte-Auswahleinrichtung (36), um es einer Bedienungsperson zu ermöglichen, eine aus einer Mehrzahl an einer Bilddichte-Anzeigesektion angezeigten, vorbestimmten Bilddichten auszuwählen, um damit eine Gesamtbilddichte des Bildes einzustellen, sowie
eine γ-Korrekturwert-Anzeigesektion zum Anzeigen bzw. Wiedergeben des im zweiten Speicher abgespeicherten γ-Korrekturwerts, wobei die γ-Korrekturwert-Anzeigesektion angrenzend an die Bilddichte-Anzeigesektion angeordnet ist und die Befehlseinrichtung allgemein zum Betätigen der Bilddichte-Auswahleinrichtung verwendet werden kann.

5. Bilderzeugungsvorrichtung gemäß Anspruch 1, ferner umfassend:
eine Bildlesesektion (12,13) zum Lesen eines Dokumentbildes auf einem Dokument und zum Umwandeln des Dokumentbildes in ein Bildsignal.

6. Bilderzeugungsvorrichtung gemäß Anspruch 1, ferner umfassend:
eine Bildlesesektion (12,13) zum Lesen eines Dokumentbildes auf einem Dokument und zum Umwandeln des Dokumentbildes in das genannte Bildsignal.

7. Bilderzeugungsvorrichtung gemäß Anspruch 6, wobei der zweite Speicher eine Mehrzahl von Datenelementen gemäß einer Mehrzahl aus der vorbestimmten Mehrzahl von γ-Korrekturwerten speichert, und wobei eines aus der Mehrzahl von im zweiten Speicher abgespeicherten Datenelementen durch die Befehlseinrichtung ausgewählt werden kann.

8. Bilderzeugungsvorrichtung gemäß Anspruch 6, ferner eine γ-Korrekturwert-Anzeigesektion zum Anzeigen des im zweiten Speicher abgespeicherten γ-Korrekturwerts umfassend.

9. Bilderzeugungsvorrichtung gemäß Anspruch 6, ferner umfassend:
eine Bilddichte-Auswahleinrichtung (36), um es einer Bedienungsperson zu ermöglichen, eine aus einer Mehrzahl an einer Bilddichte-Anzeigesektion angezeigten, vorbestimmten Bilddichten auszuwählen, um damit eine Gesamtbilddichte des Bildes einzustellen, sowie
eine γ-Korrekturwert-Anzeigesektion zum Anzeigen des im zweiten Speicher abgespeicherten γ-Korrekturwerts, wobei die γ-Korrekturwert-Anzeigesektion angrenzend an die Bilddichte-Anzeigesektion angeordnet ist und die Befehlseinrichtung allgemein zum Betätigen der Bilddichte-Auswahleinrichtung verwendet werden kann.

## Revendications

1. Un dispositif de formation d'image (10) comprenant :
(a) des moyens d'enregistrement d'image (14, 15) pour enregistrer une image sur une feuille d'enregistrement à partir d'un signal d'image ;
(b) une première mémoire (23) pour mettre en mémoire une pluralité prédéterminée de valeurs de correction γ pour corriger la caractéristique γ de l'image ;
(c) des moyens de contrôle (21) pour corriger le signal d'image en fonction de l'une parmi la pluralité prédéterminée des valeurs de correction γ mises en mémoire dans la première mémoire et pour adresser le signal d'image corrigé aux moyens d'enregistrement d'image,
dans lequel, lorsqu'un mode de surveillance d'image est sélectionné, les moyens de contrôle contrôlent les moyens d'enregistrement d'image pour former une pluralité d'images de surveillance correspondant à la pluralité prédéterminée des valeurs de correction γ mises en mémoire dans la première mémoire,
et caractérisé en ce qu'il comporte en outre :
(d) une deuxième mémoire (25) pour mettre en mémoire des données en fonction d'une valeur de correction γ présélectionnée souhaitée et sélectionnée par un opérateur en correspondance à une image sélectionnée parmi la pluralité d'images de surveillance ;
(e) des moyens d'entrée (34) pour permettre à l'opérateur d'introduire en entrée ladite valeur de correction γ présélectionnée souhaitée vers ladite deuxième mémoire ; et
(f) des moyens d'instruction (33) pour rappeler lesdites données en fonction de ladite valeur de correction γ présélectionnée mise en mémoire dans la deuxième mémoire,
dans lequel, lorsque ladite valeur de correction γ présélectionnée est rappelée par le fonctionnement des moyens d'instruction, les moyens de contrôle corrigent les signaux d'image à partir de ladite valeur de correction γ présélectionnée rappelée, sans former ladite pluralité d'images de surveillance, et adressent le signal d'image corrigé aux moyens d'enregistrement d'image pour enregistrer l'image sur la feuille d'enregistrement.

2. Le dispositif de formation d'image selon la revendication 1, dans lequel la deuxième mémoire met en mémoire une pluralité d'articles de données en correspondance avec la pluralité prédéterminée des valeurs de correction γ, et dans lequel l'un parmi la pluralité d'articles de données mis en mémoire dans la deuxième mémoire peut être sélectionné par les moyens d'instruction.

3. Le dispositif de formation d'image selon la revendication 1, comprenant en outre une partie d'affichage de valeurs de correction γ pour afficher la valeur de correction γ mise en mémoire dans la deuxième mémoire.

4. Le dispositif de formation d'image selon la revendication 1, comportant en outre :
- des moyens (36) de sélection de densité d'image pour permettre à un opérateur de sélectionner l'une parmi la pluralité de densités d'images prédéterminées affichées sur une partie d'affichage de densités d'image, de façon à fixer une densité d'image générale de l'image ; et
- une partie d'affichage de valeurs de correction γ pour afficher la valeur de correction γ mise en mémoire dans la deuxième mémoire,
dans lequel la partie d'affichage de valeurs de correction γ est disposée adjacente à la partie d'affichage de densités d'image et les moyens d'instruction peuvent être habituellement utilisés pour faire fonctionner les moyens de sélection de densités d'image.

5. Le dispositif de formation d'image selon la revendication 1, comportant en outre une partie (12, 13) de lecture d'image pour lire une image sur un document et pour convertir l'image du document en un signal d'image.

6. Le dispositif de formation d'image selon la revendication 1, comportant en outre :
- une partie de lecture d'image (12, 13) pour lire une image de document sur un document et pour convertir l'image de document en lesdits signaux d'image.

7. Le dispositif de formation d'image selon la revendication 6, dans lequel la deuxième mémoire met en mémoire une pluralité d'articles de données en fonction de la pluralité prédéterminées des valeurs de correction γ, et dans lequel l'un parmi la pluralité d'articles de données mis en mémoire dans la deuxième mémoire peut être sélectionné par les moyens d'instruction.

8. Le dispositif de formation d'image selon la revendication 6, comportant en outre une partie d'affichage de valeur de correction γ pour afficher la valeur de correction γ mise en mémoire dans la deuxième mémoire.

9. Le dispositif de formation d'image selon la revendication 6, comportant en outre :
- des moyens (36) de sélection de densités d'image pour permettre à un opérateur de sélectionner l'une parmi la pluralité de densités d'image prédéterminées affichée sur une partie d'affichage de densités d'image, de façon à fixer une densité d'image générale de l'image ; et
- une valeur de correction γ affichant la section pour afficher la valeur de correction γ mise en mémoire dans la deuxième mémoire,
dans lequel la partie d'affichage de valeur de correction γ est disposée adjacente à la partie d'affichage de densités d'image et les moyens d'inscription peuvent être habituellement utilisés pour actionner les moyens de sélection de densités d'image.
